# EUROPEAN PATENT SPECIFICATION

(11) **EP 2 610 798 B1**
(45) Date of publication and mention of the grant of the patent: **21.10.2015**
(21) Application number: 11196109.0
(22) Date of filing: 29.12.2011
(51) Int. Cl.: G06Q 20/02, G06Q 20/32, H04L 29/08, G06F 9/445, G06Q 20/10, H04L 29/06

(54) **Communications system providing enhanced trusted service manager (tsm) verification features and related methods**
Kommunikationssystem mit verbesserten Funktionen zur Prüfung des Trusted Service Manager (TSM) und zugehörige Verfahren
Système de communications fournissant des fonctionnalités améliorées de vérification du gestionnaire de services sécurisés et procédés apparentés

(43) Date of publication of application: 03.07.2013
(73) Proprietor: BlackBerry Limited, Waterloo, ON N2K 0A7 (CA)
(72) Inventor: Krzeminski, Marek, Waterloo, Ontario N2L 3W8 (CA); Singh, Ravi, Mississauga, Ontario L4W 0B5 (CA); Gagne, Marie Anita Brigitte, Kanata, Ontario K2K 3K1 (CA); Marcovecchio, Vincenzo Kazimierz, Kanata, Ontario K2K 3K1 (CA)
(74) Representative: Bryn-Jacobsen, Caelia

(56) References cited:
- EP-A1- 2 043 016
- US-A1- 2005 131 835
- US-A1- 2006 136 548
- US-A1- 2010 306 076

## Description

### Technical Field

This application relates to the field of communications, and more particularly, to electronic devices and related methods that use near-field communication (NFC).

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the Internet via a cellular network and/or a wireless local area network (WLAN), for example.

US 2006/136548 discloses, in a mobile phone, a trusted application and a download helper are executed to generate an area reservation request message for requesting reservation of a storage area for storing a grogram, data, and the like. This message is transmitted to an area management server. When the area management server receives the area reservation message, it transmits an area reservation instruction message to the mobile phone. When the mobile phone receives the area reservation instruction message, the storage area for storing the program, the data, and the like is reserved in an external memory. A downloaded program and data are stored into this area.

According to one aspect there is provided a trusted service manager, a communication system, and a communication method as set out in the independent claims; with some optional features set out in the claims dependent thereto.

Some mobile devices incorporate contactless card technology and/or near field communication (NFC) chips. NFC technology is commonly used for contactless short-range communications based on radio frequency identification (RFID) standards, using magnetic field induction to enable communication between electronic devices, including mobile wireless communications devices. These short-range communications include payment and ticketing, electronic keys, identification, device set-up service and similar information sharing. This short-range high frequency wireless communications technology exchanges data between devices over a short distance, such as only a few centimeters.

### Brief Description of the Drawings

FIG. 1 is a schematic block diagram of a communications system in accordance with one example aspect.
FIG. 2 is a flow diagram illustrating method aspects associated with the system of FIG. 1.
FIG. 3 is a front view of an example mobile device which may be used with the system of FIG. 1 illustrating a mobile wallet configuration.
FIG. 4 is a front view of the mobile device of FIG. 3 illustrating a point-of-sale transaction configuration.
FIG. 5 is a schematic diagram illustrating example components that may be used with the mobile devices of FIGS. 1, 3, or 4.

### Detailed Description

The present description is made with reference to the accompanying drawings, in which example embodiments are shown. However, many different embodiments may be used, and thus the description should not be construed as limited to the embodiments set forth herein. Rather, these embodiments are provided so that this disclosure will be thorough and complete. Like numbers refer to like elements throughout.

Generally speaking, a trusted service manager (TSM) server is provided which may include at least one communications device capable of communicating with at least one mobile communications device. The TSM server may further include a processor coupled with the at least one communications device and capable of registering an application source, and receiving a request from the application source to access the memory of the at least one mobile communications device. The TSM server may be further capable of verifying the at least one application server based upon the access request and based upon registering of the application source, and writing application data from the application source to the memory of the at least one mobile communications device based upon verifying the application source. Accordingly, this approach may advantageously provide a centralized repository for verifying authorized application sources that are permitted access to mobile communications device memories.

More particularly, registering of the application source may be based upon a service identifier associated with the application source. Moreover, the service identifier may comprise a service identification (ID) associated with the application data and an application ID associated with the application source. In addition, the processor may be further capable of suspending the registration of the application source to prevent writing of application data from the application source to the memory.

Writing of the application data to the memory may comprise at least one of installing a new application or updating an existing application, for example. Also by way of example, the application data may comprise financial transaction application data, physical access application data, etc. The processor may register the application source with a verification database server, for example, and may cooperate with the verification database server to verify the application source.

A related communications system may include at least one mobile communications device comprising a memory, and a TSM server, such as the one described briefly above. A related communications method is also provided and may include registering an application source at a trusted service manager (TSM) server, and receiving a request from the application source to access the memory of the mobile communications device. The method may further include verifying the application source based upon the access request and based upon registering of the application source, and writing application data from the application server to the memory of the at least one mobile communications device via the TSM server based upon verifying the application source.

A related computer-readable medium is also provided. The computer-readable medium may have computer-executable instructions for causing a TSM server to perform steps comprising registering an application source, receiving a request from the application source to access the memory of the mobile communications device, verifying the application source based upon the access request and based upon registering of the application source, and writing application data from the application source to the memory of the at least one mobile communications device based upon verifying the application source.

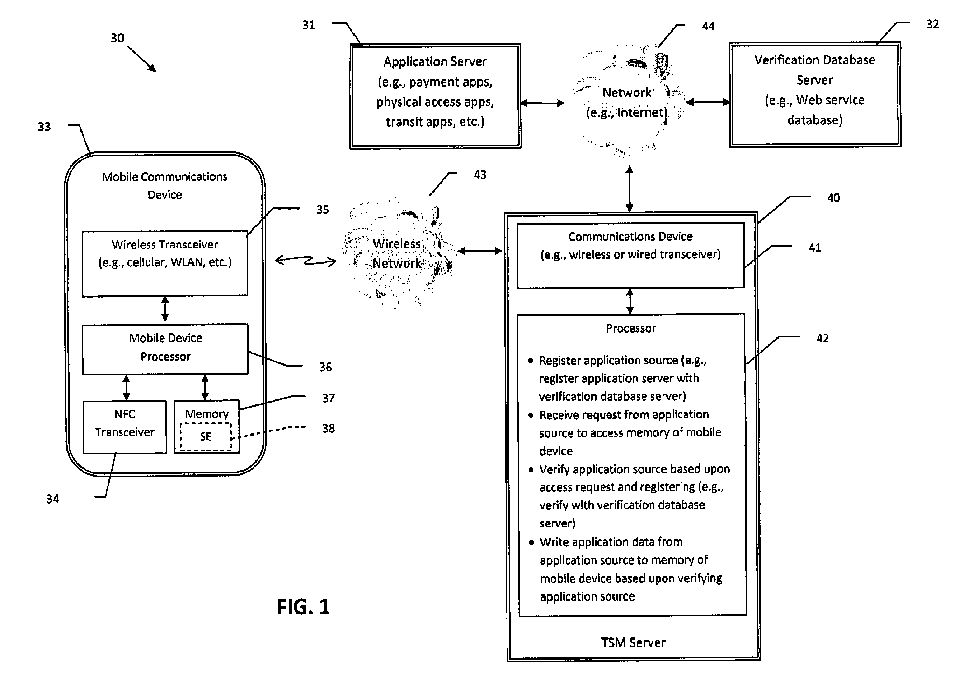

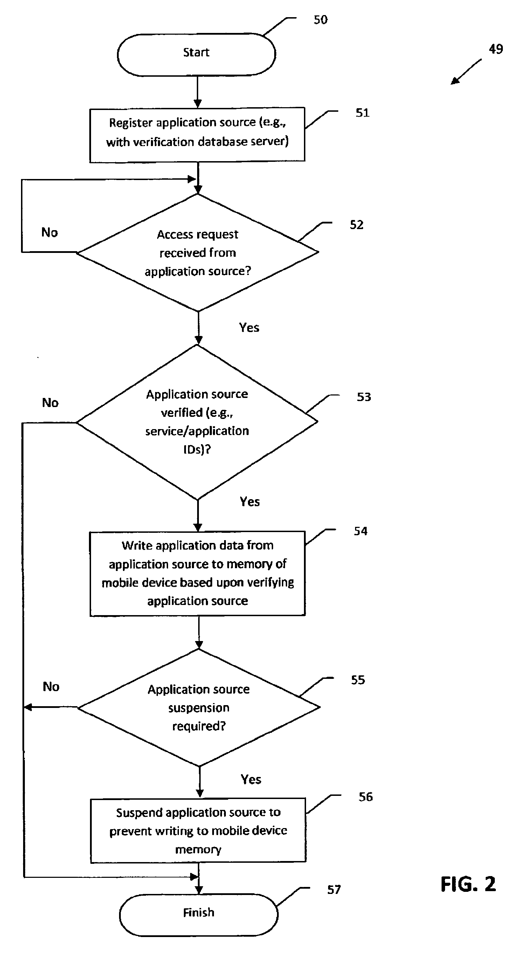

Referring initially to FIGS. 1 through 3, a communications system **30** and associated method aspects are first described. The system **30** illustratively includes one or more application servers **31,** a verification database server **32,** and one or more mobile communications devices **33** (also referred to as "mobile devices" herein). The mobile device **33** illustratively includes a near field communication (NFC) transceiver **34,** a wireless transceiver **35** (e.g., cellular, wireless LAN, etc.), and a mobile device processor **35** coupled with the NFC transceiver **34** and the wireless transceiver **35.** By way of example, the NFC transceiver **34** may be implemented as an NFC chipset which may include other associated components such as an NFC controller, an embedded memory **37** which may be configured as a secure element **38,** etc., along with associated computer-executable instructions. However, it should be noted that the memory **37** need not be part of a NFC chipset in all embodiments. For example, the memory **37** may comprise a subscriber identity module (SIM) card, an electronic universal integrated circuit card (eUICC), a removable memory, an SD card, etc., for example, and more than one memory or secure element may be used in different embodiments.

The mobile device processor **36** may be considered as a baseband processor, and it may be implemented using a combination of hardware (e.g., microprocessor, etc.) and a computer-readable medium having computer-executable instructions for performing the various operations noted herein. The mobile device processor **36** and the NFC transceiver **34** may communicate via a designated communications channel, such as a JSR-177 communications channel, for example, although other suitable communications formats may also be used. Example types of mobile devices **33** may include portable or personal media players (e.g., music or MP3 players, video players, electronic book readers, etc.), portable gaming devices, portable or mobile telephones, smartphones, portable computers such as tablet computers, digital cameras, etc.

By way of background, NFC is a short-range wireless communications technology in which NFC-enabled devices are "swiped," "bumped" or otherwise moved in close proximity to communicate. In one non-limiting example implementation, NFC may operate at 13.56 MHz and with an effective range of several centimeters (typically up to about 4 cm, or up to about 10 cm, depending upon the given implementation), but other suitable versions of near field communication which may have different operating frequencies, effective ranges, etc., for example, may also be used.

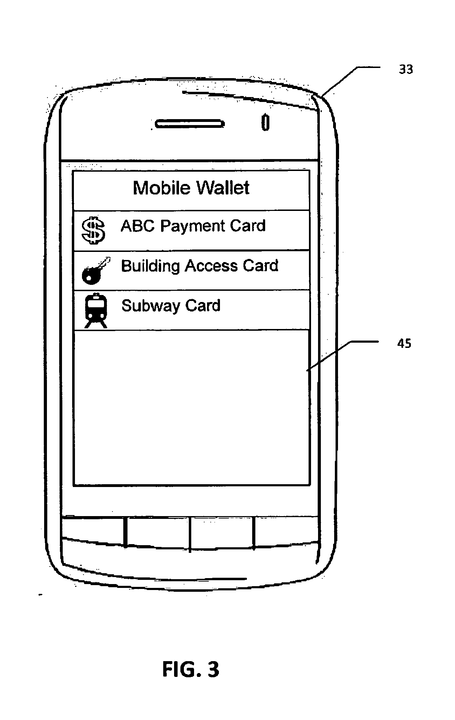

Due to the relatively short effective range, NFC communication is particularly well suited for secure applications such as financial transactions (e.g., credit or debit card payment or purchases), security or physical access applications (e.g., building or parking garage access), transit access (e.g., subway, bus, etc.), for example. Various applications or apps may be installed for causing the NFC-enabled mobile device **33** to securely perform such functions. Generally speaking, applications may be stored in a general device memory, such as plug-in applications for a mobile device wallet, as shown in FIG. 3. Here, the mobile device **33** illustratively includes a display **45,** on which a mobile wallet graphical user interface (GUI) is displayed to allow the various application plug-ins to be selected. These applications, in turn, cause the mobile device processor **36** to communicate with the secure element **38** (e.g., via a JSR-177 channel), which securely stores the corresponding app and authentication data to effectuate the given NFC transaction (e.g., payment, building access, etc.).

In the example of FIG. 3, the mobile wallet includes plug-in applications for an ABC payment card, a building access card, and a subway card, although other types or combinations of cards may be present on different mobile devices **33.** The secure element data for each application may be provided by respective application servers **31,** as will be discussed further below.

Generally speaking, the NFC transceiver **34** may be operable in active or passive modes. Active mode operation may include a peer-to-peer (P2P) mode or a read/write (R/W) mode, for example. During passive operation, the NFC transceiver **34** may function as an NFC tag that is powered by a field from another NFC device (e.g., an NFC reader). The NFC transceiver **34** may also be operable in a power conservation mode, such as a low power tag detection mode, for example.

The system **30** further illustratively includes a trusted service manager (TSM) server **40,** which further includes one or more communications devices **41** and a processor **42** coupled with the communications device(s) **41.** Similar to the mobile device processor **35** described above, the processor **42** may be implemented with a combination of hardware (e.g., microprocessor, etc.) and a computer-readable medium having computer-executable instructions for performing the various operations noted herein. The TSM server **40** advantageously controls access to the secure element **38,** so that only application servers **31** associated with authorized service providers are allowed to install or modify secure applications or apps on the secure element **38.** As used herein, an "application source" may refer to an authorized service provider, or an application server **31** associated with a given authorized service provider, for example. In one example embodiment, the TSM server **40** may be associated with a mobile device manufacturer to thereby control access to the secure elements **38** on mobile device **33** produced by the manufacturer. Another example implementation is for a network carrier (e.g., a cellular network carrier), which may advantageously control access to secure elements **38** on mobile devices **33** being used on the carrier's network, either for specific types or categories of mobile devices or all mobile devices using the network.

The communications device **41** may comprise a wired or wireless transceiver, for example, which may communicate with the wireless transceiver **35** of the mobile device **33** via a wireless (e.g., cellular, WLAN, etc.) network **43.** The communications device **41** may be capable of communicating with an application source (which for the examples described herein will be considered the application server **31**) and the verification database server **32** via one or more networks **44**, such as the Internet, for example. By way of example, the verification database server **32** may comprise a Web service database, which advantageously provides a central database repository of authorized service providers that are permitted to access the secure element **37** of the mobile device **33,** as will be discussed further below. However, it should be noted that in some embodiments the verification database server **32** may be accessible via a local area network, etc., or the TSM server 40 may maintain its own verification database.

Beginning at Block **50** of the flow diagram **49,** the application server **31** may be registered with the verification database server **32,** at Block **51,** which establishes the application server **31** as belonging to a trusted or approved service provider that is permitted to write data for its respective applications (i.e., installing new applications or updating previously installed applications) on the secure element **38** of the mobile device **33.** By way of example, the operator of the application sever **31** may communicate a request to the TSM server **40** to register as an approved service provider, such as through a Web interface, for example. The request may include a respective service identifier, which may include a service identification (ID) to identify the application or service to be accessed on the mobile device **33**, as well as an application ID which identifies the application server **31,** for example. Registration of the application server **31** with the verification database server **32** may be a required prerequisite to requesting access to the secure element **38.**

Upon receiving a request from the application server **31** to access the secure element **38,** at Block **52,** the TSM server **40** cooperates with the verification database server **32** to verify that the request is from an authorized service provider, at Block **53,** prior to granting the access request (Block **54**). In accordance with one example implementation, when the application server **31** attempts to access the secure element **38,** it makes a request including a service identifier indicating a service (e.g., by its service ID) on the secure element **38** to be accessed as well as the respective application ID of the application server **31.** The service identifier may be used to make a Web service call to the verification database server **32** to obtain a list of stored service identifiers. Access by the application server **31** to the secure element **38** may be allowed or restricted based upon verification of the service identifier included in the request with respect to the list of stored service identifiers.

If a connection to the verification database **32** cannot be made, or if a connection is made but the application server **31** is not properly verified, then access to the secure element **38** will be denied, which concludes the illustrated method, at Block **57.** If access is allowed (meaning the application server **31** is properly verified), then the TSM server **40** may advantageously establish a secure communications channel with the mobile device **33** for performing the requisite data writing operations (e.g., new application installation, modification, updating, etc.) to the secure element **38.** By way of example, the secure channel may be implemented in accordance with the GlobalPlatform Card Specification v2.2, or other suitable secure channel architecture. In accordance with one example embodiment, the TSM server **40** may use a "push" message to initiate the secure element **38** update process, which may advantageously help ensure that the correct device (and thus correct secure element) is being accessed. The TSM server **40** may then advantageously perform all of the necessary changes on the secure element **38.** However, other suitable communications approaches between the TSM server **40** and the mobile device **33** may also be used.

The TSM server **40** may thereby cooperate with the verification database server **32** to help ensure that only authorized or verified third party application servers **31** are allowed to obtain access to the secure element **38** on the mobile device **33.** Yet, in addition to providing a convenient central repository for information about approved application servers **31,** the verification database server **32** also advantageously provides a relatively quick and convenient approach for suspending access by application servers **31** to secure elements **38** under the control of the TSM server **40,** at Blocks **55-56.** For example, if an application associated with the application server **31** is modified in such a way that it violates applicable network policies or terms of use (e.g., security requirements, resource utilization requirements, etc.), then the TSM server **40** may advantageously suspend the registration of the given application server **31** with the verification database server **32.** This advantageously prevents the application server **31** from any further writing of data to or otherwise accessing the secure elements **38** of one or more of the mobile devices **33** serviced by the TSM server **40.** Other reasons for suspending an application server **31** may include network security or operational problems, scheduled system maintenance, etc. The suspension may be temporary or permanent, depending upon the given circumstances. In some instances, the registration of the application server **31** may be completely cancelled or revoked.

Thus, suspending or revoking access to the secure element **38** by the application server **31** may be easily accomplished by updating the appropriate database tables of the verification database server **32,** for example. Advantageously, no changes to the mobile device **33** are required to restrict access to the secure element **38,** which advantageously avoids the need for excess communication between numerous mobile devices **33** and the TSM server **40** whenever a suspension or restriction is necessary. This may also advantageously help expedite the suspension process to quickly deal with potential mobile device or network security breaches.

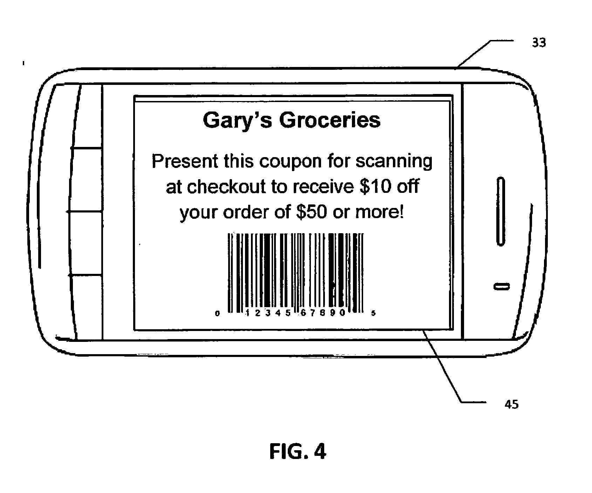

Referring additionally to FIG. 4, in some embodiments the verification database server **32** may be used for applications which need not require NFC communication, such as coupons or Internet payments, for example. In the illustrated example, a coupon application is installed on the mobile device **33,** and the application server **31** may request access to the memory **37** to provide updated coupons for new offers or sales. More particularly, the mobile device **33** may be registered with the application server **31,** so that the application server **31** may distribute coupons or other offers of interest to the mobile device user. Here, a coupon for "Gary's Groceries" has been provided to the mobile device **33** after the above-described verification procedures are performed by the TSM server **40** and the verification database server **32.** The coupon has a bar code thereon and may be presented on the display **45** at the time of use, for example, so the bar code may be scanned at a point-of-sale (POS) terminal. In other implementations, the coupon may include a QR code or other suitable indicia, for example. Moreover, in some embodiments the coupon may include information to be communicated via NFC, in addition to or instead of a bar code or QR code.

A similar embodiment for Internet-based payments may allow a user to access a merchant website on the mobile device 33, and access a wallet application to make online payments. As with the above-described coupon embodiment, this approach may also benefit from the enhanced security provided by the verification server database **32.** Moreover, in some embodiments the verification database server **32** may advantageously be used with more than one TSM server **40,** to thereby provide a central repository or authorized application sources for multiple TSM servers, rather than a single TSM server, as described above.

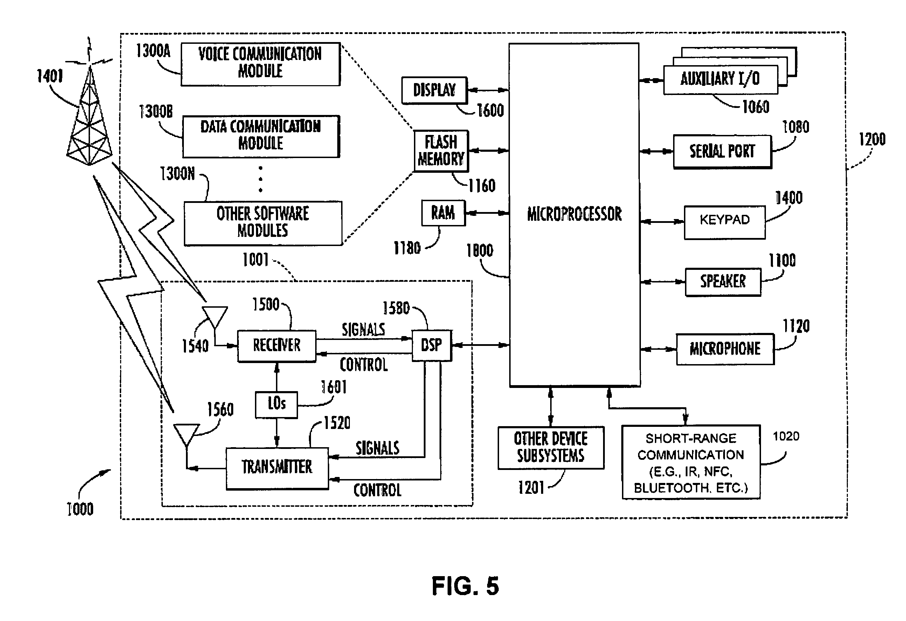

Example components of a mobile wireless communications device **1000** that may be used in accordance with the above-described embodiments are further described below with reference to FIG. 5. The device **1000** illustratively includes a housing **1200,** a keyboard or keypad **1400** and an output device **1600.** The output device shown is a display **1600,** which may comprise a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 5. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or a near field communications (NFC) sensor for communicating with a NFC transceiver or NFC tag via NFC communications, as noted above.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A trusted service manager, TSM, server (40) comprising:
a communications device (41); and
a processor (42) coupled with the at least one communications device and capable of
registering an application source (31), receiving a request from the application source to access a memory (37) of at least one mobile communications device (33),
verifying the application source based upon the access request and based upon registering of the at application source, and
writing application data from the application source to the memory of the at least one mobile communications device (33) based upon verifying the application source (31).

2. The TSM server of Claim 1 wherein registering of the application source is based upon a service identifier associated with the application source.

3. The TSM server of Claim 2 wherein the service identifier comprises a service identification (ID) associated with the application data and an application ID associated with the application source.

4. The TSM server of Claim 1 wherein the processor is further capable of suspending the registration of the application source to prevent writing of application data to the memory.

5. The TSM server of Claim 1 wherein writing the application data to the memory comprises at least one of installing a new application or updating an existing application.

6. The TSM server of Claim 1 wherein the application data comprises at least one of financial transaction application data or physical access application data.

7. The TSM server of Claim 1 wherein registering comprises registering the application source with a verification database server (32) ; and wherein verifying comprises cooperating with the verification database server to verify the application source.

8. A communications system (30) comprising:
at least one mobile communications device (33) comprising a memory (37); and
a trusted service manager, TSM, server (40) capable of communicating with the at least one mobile communications device, the TSM server also being capable of
registering an application source (31),
receiving a request from the application source to access the memory of the at least one mobile communications device,
verifying the application source based upon the access request and based upon registering of the application source, and
writing application data from the application source to the memory of the at least one mobile communications device based upon verifying the application source.

9. The communications system of Claim 8 wherein the TSM server is further capable suspending the registration of the application source to prevent writing of application data from the application source to the memory.

10. The communications system of Claim 8 wherein the memory comprises a secure element (38).

11. The communications system of Claim 8 wherein the at least one mobile communications device further comprises an NFC transceiver (34); and wherein the application data is capable of causing the NFC transceiver to communicate via NFC.

12. A communications method comprising:
registering an application source at a trusted service manager, TSM, server;
at the TSM server, receiving a request from the application source to access a memory of at least one mobile communications device;
verifying the application source based upon the access request and based upon registering of the application source; and
writing application data from the application source to the memory of the at least one mobile communications device via the TSM server based upon verifying the application source.

13. The method of Claim 12 wherein registering of the application source is based upon a service identifier associated with the application source.

14. The method of Claim 12 further comprising suspending the registration of the application source by the TSM server to prevent writing of application data from the application source to the memory.

15. The method of Claim 1 wherein writing the application data from the application source to the memory comprises at least one of installing a new application or updating an existing application.

## Patentansprüche

1. Ein "vertrauenswürdige Diensteverwaltung (TSM - trusted service manager)"-Server (40), der aufweist:
eine Kommunikationsvorrichtung (41); und
einen Prozessor (42), der mit der zumindest einen
Kommunikationsvorrichtung gekoppelt ist und fähig ist zum Registrieren einer Anwendungsquelle (31), Empfangen einer Anforderung von der Anwendungsquelle zum Zugreifen auf einen Speicher (37) zumindest einer mobilen Kommunikationsvorrichtung (33), Verifizieren der Anwendungsquelle basierend auf der Zugriffsanforderung und basierend auf einem Registrieren der Anwendungsquelle, und Schreiben von Anwendungsdaten von der Anwendungsquelle in den Speicher der zumindest einen mobilen Kommunikationsvorrichtung (33) basierend auf dem Verifizieren der Anwendungsquelle (31).

2. Der TSM-Server gemäß Anspruch 1, wobei das Registrieren der Anwendungsquelle auf einem Dienst-Identifizierer basiert, der mit der Anwendungsquelle assoziiert ist.

3. Der TSM-Server gemäß Anspruch 2, wobei der Dienst-Identifizierer eine Dienst-Identifikation (ID), die mit den Anwendungsdaten assoziiert ist, und eine Anwendungs-ID aufweist, die mit der Anwendungsquelle assoziiert ist.

4. Der TSM-Server gemäß Anspruch 1, wobei der Prozessor weiter fähig ist zum Suspendieren der Registrierung der Anwendungsquelle, um ein Schreiben von Anwendungsdaten in den Speicher zu verhindern.

5. Der TSM-Server gemäß Anspruch 1, wobei das Schreiben der Anwendungsdaten in den Speicher zumindest eines aus einem Installieren einer neuen Anwendung oder einem Aktualisieren einer existierenden Anwendung aufweist.

6. Der TSM-Server gemäß Anspruch 1, wobei die Anwendungsdaten zumindest eines aus Finanztransaktionsanwendungsdaten oder Anwendungsdaten für einen physikalischen Zugang aufweisen.

7. Der TSM-Server gemäß Anspruch 1, wobei das Registrieren ein Registrieren der Anwendungsquelle mit einem Verifikationsdatenbankserver (32) aufweist; und wobei das Verifizieren ein Kooperieren mit dem Verifikationsdatenbankserver aufweist, um die Anwendungsquelle zu verifizieren.

8. Ein Kommunikationssystem (30), das aufweist:
zumindest eine mobile Kommunikationsvorrichtung (33) mit einem Speicher (37); und
einen TSM(trusted service manager)-Server (40), der fähig ist zum Kommunizieren mit der zumindest einen mobilen
Kommunikationsvorrichtung, wobei der TSM-Server auch fähig ist zum Registrieren einer Anwendungsquelle (31), Empfangen einer Anforderung von der Anwendungsquelle zum Zugreifen auf den Speicher der zumindest einen mobilen Kommunikationsvorrichtung, Verifizieren der Anwendungsquelle basierend auf der Zugriffsanforderung und basierend auf einem Registrieren der Anwendungsquelle, und Schreiben von Anwendungsdaten von der Anwendungsquelle in den Speicher der zumindest einen mobilen Kommunikationsvorrichtung basierend auf dem Verifizieren der Anwendungsquelle.

9. Das Kommunikationssystem gemäß Anspruch 8, wobei der TSM-Server weiter fähig ist zum Suspendieren der Registrierung der Anwendungsquelle, um ein Schreiben von Anwendungsdaten von der Anwendungsquelle in den Speicher zu verhindern.

10. Das Kommunikationssystem gemäß Anspruch 8, wobei der Speicher ein sicheres Element (38) aufweist.

11. Das Kommunikationssystem gemäß Anspruch 8, wobei die zumindest eine mobile Kommunikationsvorrichtung weiter einen NFC-Transceiver (34) aufweist; und wobei die Anwendungsdaten fähig sind, den NFC-Transceiver zu veranlassen, über NFC zu kommunizieren.

12. Ein Kommunikationsverfahren, das aufweist:
Registrieren einer Anwendungsquelle an einem TSM(trusted service manager)-Server;
an dem TSM-Server, Empfangen einer Anforderung von der Anwendungsquelle zum Zugreifen auf einen Speicher zumindest einer mobilen Kommunikationsvorrichtung;
Verifizieren der Anwendungsquelle basierend auf der Zugriffsanforderung und basierend auf einem Registrieren der Anwendungsquelle; und
Schreiben von Anwendungsdaten von der Anwendungsquelle in den Speicher der zumindest einen mobilen Kommunikationsvorrichtung über den TSM-Server basierend auf dem Verifizieren der Anwendungsquelle.

13. Das Verfahren gemäß Anspruch 12, wobei das Registrieren der Anwendungsquelle auf einem Dienst-Identifizierer basiert, der mit der Anwendungsquelle assoziiert ist.

14. Das Verfahren gemäß Anspruch 12, das weiter aufweist ein Suspendieren der Registrierung der Anwendungsquelle durch den TSM-Server, um ein Schreiben von Anwendungsdaten von der Anwendungsquelle in den Speicher zu verhindern.

15. Das Verfahren gemäß Anspruch 1, wobei das Schreiben der Anwendungsdaten von der Anwendungsquelle in den Speicher zumindest eines aus einem Installieren einer neuen Anwendung oder einem Aktualisieren einer existierenden Anwendung aufweist.

## Revendications

1. Serveur de gestionnaire de service de confiance, TSM, (40) comprenant :
un dispositif de communications (41) ; et
un processeur (42) couplé avec le au moins un dispositif de communications et capable de
enregistrer une source d'application (31),
recevoir une demande en provenance de la source d'application pour accéder à une mémoire (37) d'au moins un dispositif de communications mobile (33),
vérifier la source d'application sur la base de la demande d'accès et sur la base de l'enregistrement de la source d'application, et
écrire des données d'application en provenance de la source d'application vers la mémoire du au moins un dispositif de communications mobile (33) sur la base de la vérification de la source d'application (31).

2. Serveur TSM selon la revendication 1, dans lequel l'enregistrement de la source d'application est basé sur un identificateur de service associé à la source d'application.

3. Serveur TSM selon la revendication 2, dans lequel l'identificateur de service comprend une identification (ID) de service associée aux données d'application et une ID d'application associée à la source d'application.

4. Serveur TSM selon la revendication 1, dans lequel le processeur est en outre capable de suspendre l'enregistrement de la source d'application pour empêcher l'écriture de données d'application vers la mémoire.

5. Serveur TSM selon la revendication 1, dans lequel l'écriture des données d'application vers la mémoire comprend au moins une de l'installation d'une nouvelle application ou de la mise à jour d'une application existante.

6. Serveur TSM selon la revendication 1, dans lequel les données d'application comprennent au moins une de données d'application de transaction financière ou de données d'application d'accès physique.

7. Serveur TSM selon la revendication 1, dans lequel l'enregistrement comprend l'enregistrement de la source d'application avec un serveur de base de données de vérification (32) ; et dans lequel la vérification comprend la coopération avec le serveur de base de données de vérification pour vérifier la source d'application.

8. Système de communications (30) comprenant :
au moins un dispositif de communications mobile (33) comprenant une mémoire (37) ; et
un serveur de gestionnaire de service de confiance, TSM, (40) capable de communiquer avec le au moins un dispositif de communications mobile, le serveur TSM étant également capable de
enregistrer une source d'application (31),
recevoir une demande en provenance de la source d'application pour accéder à la mémoire du au moins un dispositif de communications mobile,
vérifier la source d'application sur la base de la demande d'accès et sur la base de l'enregistrement de la source d'application, et
écrire des données d'application en provenance de la source d'application vers la mémoire du au moins un dispositif de communications mobile sur la base de la vérification de la source d'application.

9. Système de communications selon la revendication 8, dans lequel le serveur TSM est en outre capable de suspendre l'enregistrement de la source d'application pour empêcher l'écriture de données d'application en provenance de la source d'application vers la mémoire.

10. Système de communications selon la revendication 8, dans lequel la mémoire comprend un élément sécurisé (38).

11. Système de communications selon la revendication 8, dans lequel le au moins un dispositif de communications mobile comprend en outre un émetteur-récepteur NFC (34) ; et dans lequel les données d'application sont capables d'amener l'émetteur-récepteur NFC à communiquer via NFC.

12. Procédé de communication comprenant :
l'enregistrement d'une source d'application au niveau d'un serveur de gestionnaire de service de confiance, TSM ;
au niveau du serveur TSM, la réception d'une demande en provenance de la source d'application pour accéder à une mémoire d'au moins un dispositif de communications mobile ;
la vérification de la source d'application sur la base de la demande d'accès et sur la base de l'enregistrement de la source d'application ; et
l'écriture de données d'application en provenance de la source d'application vers la mémoire du au moins un dispositif de communications mobile via le serveur TSM sur la base de la vérification de la source d'application.

13. Procédé selon la revendication 12, dans lequel l'enregistrement de la source d'application est basé sur un identificateur de service associé à la source d'application.

14. Procédé selon la revendication 12, comprenant en outre la suspension de l'enregistrement de la source d'application par le serveur TSM pour empêcher l'écriture de données d'application en provenance de la source d'application vers la mémoire.

15. Procédé selon la revendication 1, dans lequel l'écriture des données d'application en provenance de la source d'application vers la mémoire comprend au moins une de l'installation d'une nouvelle application ou de la mise à jour d'une application existante.
